Europäisches Patentamt

European Patent Office

Office européen des brevets

(19)

(11) EP 0 483 460 B1

(12) EUROPEAN PATENT SPECIFICATION

(45) Date of publication and mention
of the grant of the patent:
18.12.1996 Bulletin 1996/51

(51) Int Cl.⁶: G01N 27/447, G01N 27/26

(21) Application number: 91112527.6

(22) Date of filing: 25.07.1991

(54) Base sequencing apparatus

Vorrichtung zur Bestimmung der Basensequenz

Appareil pour la détermination de la séquence de bases

(84) Designated Contracting States:
DE GB SE

(30) Priority: 30.10.1990 JP 294011/90

(43) Date of publication of application:
06.05.1992 Bulletin 1992/19

(73) Proprietor: SHIMADZU CORPORATION
Nakagyo-ku Kyoto-shi Kyoto 604 (JP)

(72) Inventor: Fujii, Hidehiko
Nishikyo-ku, Kyoto 610-11 (JP)

(74) Representative: Goddar, Heinz J., Dr. et al
FORRESTER & BOEHMERT
Franz-Joseph-Strasse 38
80801 München (DE)

(56) References cited:
EP-A- 0 198 403          EP-A- 0 220 732
EP-A- 0 242 629          EP-A- 0 284 660

• PATENT ABSTRACTS OF JAPAN vol. 7, no. 168
(P-212)23 July 1983 & JP-A-58 076 752

**Description**

BACKGROUND OF THE INVENTION

Field of the Invention

The present invention relates to an on-line system base sequencing apparatus for introducing nucleic acid fragment samples which are pretreated by the Sanger's method using fluorescent primers (primers obtained by chemically bonding fluorescent materials as markers) into a sample introducing part of a slab type gel provided in a gel electrophoresis apparatus in units of end bases, simultaneously electrophoresing the samples and detecting fluorescence during the electrophoresis by excitation and detection optical systems which are scanned in a direction perpendicular to the electrophoresis direction, thereby performing base sequencing by a data processing unit.

Description of the Background Art

In an on-line system base sequencing apparatus using a slab type gel, nucleic acid fragments which are previously treated by the Sanger's method are electrophoresed in different electrophoresis lanes in response to the types A (adenine), G (guanine), T (thymine) and C (cytosine) of the end bases thereof.

In general, a gel electrophoresis apparatus causes the so-called smiling, i.e., such a phenomenon that the electrophoresis speeds vary with the electrophoresis lanes. If signals are successively read from the electrophoresis lanes for the end bases A, G, T and C and the samples are directly base-sequenced in spite of such smiling, the sequence is inversed, to result in misreading.

It is believed that such smiling is mainly caused by temperature distributions in the electrophoresis lanes caused by Joule heat, which is generated as the result of electrophoresis. In order to prevent such smiling, there has been proposed a method of bringing a metal plate into close contact with an electrophoresis plate thereby homogenizing the temperature, or storing the electrophoresis plate in a closable container and supplying air which is controlled at a constant temperature thereby homogenizing the temperature, as disclosed in Japanese Patent Laying-Open Gazette No. 2-143145 (1990).

While mobility difference between 500 bases and 501 bases is 0.2 % (= 1/500), for example, it is necessary to control temperature irregularity to be not more than 0.1°C in order to suppress mobility difference which is caused by smiling to be not more than 0.2 % by temperature control. This is difficult in practice.

On the other hand, an electrophoresis gel contains electrolytic ammonium persulfate as a catalyst, which comes out toward the side of an external electrode buffer following electrophoresis. If the concentration of this electrolyte is varied with positions, difference in ionic strength is caused between the electrophoresis lanes, to cause smiling as the result. Smiling based on heterogeneous concentration of the electrolyte cannot be prevented by temperature control.

In addition to the aforementioned smiling, misreading of the base sequence is also caused by heterogeneous sample introduction slots of the electrophoresis lanes. In general, electrophoresis distances (distances between sample introduction slots and a detection part) of an on-line system fluorescent DNA sequencing apparatus are about 200 to 500 mm. At the sample introduction slots, sample positions may be easily displaced by 1 to 2 mm from each other by inferiority of horizontality in gel formation, penetration of urea within the slots, and the like. Such difference of 1 mm at the sample introduction slots corresponds to 0.2 % (1/500) assuming that the electrophoresis distance is 500 mm. This is equal to the mobility difference between 500 bases and 501 bases. It is of course impossible to prevent such mobility difference by temperature control.

The document EP-A-0 198 403 describes a method for determining base sequence of nucleic acid that tries to prevent misreading caused by a smiling by processing digital signals corresponding to an autoradiograph. The inclination of at least one band on each electrophoretic row to the electrophoretic direction is detected, a relative position of the inclination-detected band on a standard row is determined and the migration distance from the electrophoresis starting point to the position of the band is corrected on the basis of the relative position on each lane.

But, to use this method the radiographic film has to be exposed and developed to visualize the autoradiograph or, when the radiation image recording and reproducing method is used, the radiation energy radiating from the radioactively labeled substances has to be stored in a phosphor sheet, what will take an enormous amount of time.

SUMMARY OF THE INVENTION

An object of the present invention is to provide a base sequencing on-line apparatus, which can correctly sequence bases even if mobility difference is caused between lanes by smiling or the like by a direct way without using an autoradiograph.

According to the present invention, calibration coefficients for time bases of respective electrophoresis lanes are evaluated from difference between positions of signals already outputted in such a range that no sequence inversion is caused and positions of substantially regular intervals for originally outputting signals and calibrating subsequent time bases for the respective electrophoresis lanes with the calibration coefficients, thereby attaining correct base sequence.

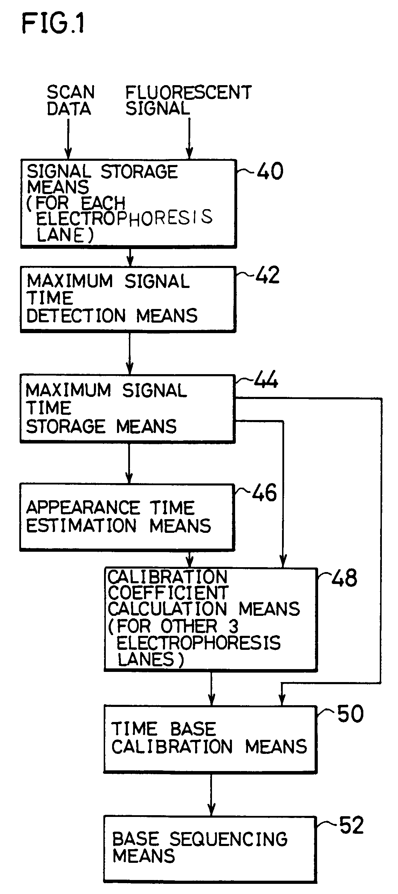

As shown in Fig. 1, a data processing unit for the inventive base sequencing apparatus comprises signal storage means 40 for storing signals from respective electrophoresis lanes with respect to times, maximum signal time detection means 42 for detecting times providing maximum values of signals as to the respective electrophoresis lanes, maximum signal time storage means 44 for storing the maximum signal times, appearance time estimation means 46 for calculating appearance times of maximum signals of the electrophoresis lanes other than a reference lane selected from four electrophoresis lanes appearing between two maximum signals of the reference lane on the assumption that there is no difference of mobility between the electrophoresis lanes, calibration coefficient calculation means 48 for calculating calibration coefficients from ratios of the maximum signal times of the three electrophoresis lanes calculated in the appearance time estimation means 46 to actual maximum signal times, time base calibration means 50 for calibrating the time base of the three electrophoresis lanes with the calibration coefficients, and base sequencing means 52 for performing base sequencing from the maximum signal times of the reference lane and the three electrophoresis lanes based on the calibrated time bases.

The appearance time estimation means 46 performs calculation on the assumption that the maximum signals of the three electrophoresis lanes appear between two maximum signals of the reference lane at regular intervals, for example.

In order to update the calibration coefficients, a calibration coefficient is calculated every time a maximum signal appears on the reference lane between this signal and a maximum signal appearing on the reference lane immediately ahead thereof. Then, the time bases of the remaining three electrophoresis lanes, which are effective until a next maximum signal appears on the reference lane, may be calibrated with the updated calibration coefficient.

In an on-line system base sequencing apparatus, signals appear in order of length, i.e., from a short nucleic acid fragment to a long nucleic acid fragment, with a lapse of time. While signals themselves are broad and sequence misreading, i.e., sequence inversion is easily caused by smiling in subsequently appearing long nucleic acid fragments, signals are sharp in previously appearing short nucleic acid fragments and no sequence inversion is caused even if smiling takes place, to result in no misreading. When short nucleic acid fragments have already appeared, however, displacement from positions for original appearance (positions which are at regular time intervals), is recognized if smiling takes place, although no sequence inversion is caused.

According to the present invention, one of electrophoresis lanes for A, G, T and C is selected as a reference lane so that the time bases of the remaining three electrophoresis lanes are calibrated with reference to the distance between two peaks of the reference lane. Thus, it is possible to correctly sequence bases even if difference is caused between electrophoresis speeds of the electrophoresis lanes by smiling or the like.

Further, the inventive method can cope with intermediate changes of electrophoresis states.

The present invention can also cope with smiling resulting from a cause other than temperature distributions.

The present invention can further cope with a system of taking data and sequencing bases successively from data taken in a multitask manner.

The present invention can be combined with a method of homogenizing temperatures by ambient air control. The accuracy is further improved in this case.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a block diagram showing functions of a signal processing microcomputer in an embodiment of the present invention;

Fig. 2 is a perspective view schematically showing the embodiment;

Fig. 3 illustrates signals of respective electrophoresis lanes measured in the embodiment;

Fig. 4 is a flow chart showing procedure for calculating calibration coefficients;

Fig. 5 illustrates exemplary maximum value data and definitive base sequence;

Fig. 6 is a flow chart showing procedure of pretreatment for discontinuous electrophoresis conditions; and

Fig. 7 illustrates exemplary detection signals in relation to fluorescence primers.

## DESCRIPTION OF THE PREFERRED EMBODIMENT

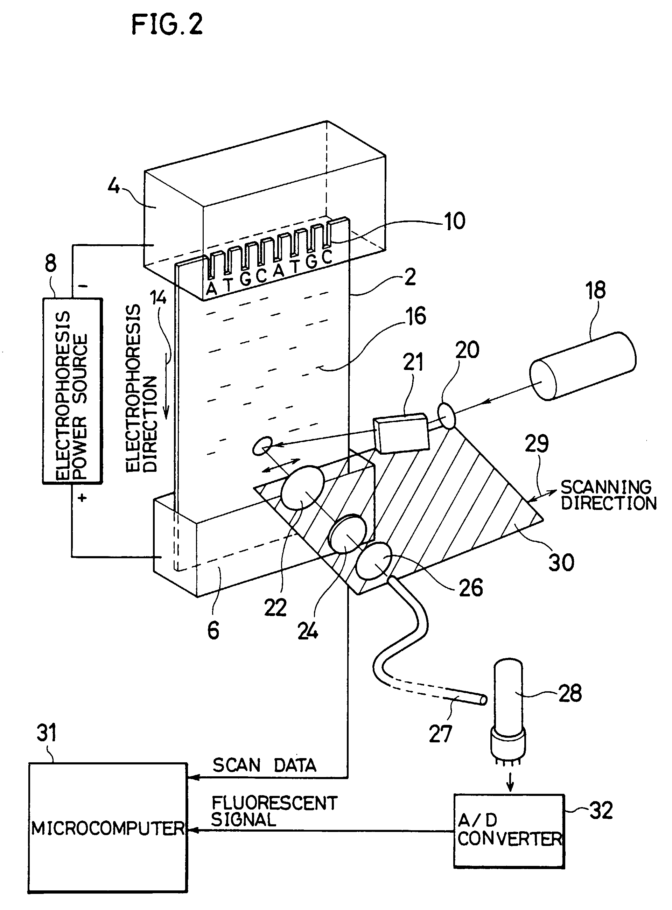

Fig. 2 is a general view showing an embodiment of the base sequencing apparatus according to the present invention.

A slab-type electrophoresis gel 2 is prepared from a polyacrylic amide gel. Both ends of the electrophoresis gel 2 are dipped in electrode layers 4 and 6, which contain electrolytic solutions. An electrophoresis power source 8 applies an electrophoresis voltage across the electrode layers 4 and 6.

Sample introduction slots 10 are provided in one end of the electrophoresis gel 2 in order to inject samples. Samples of respective end bases are introduced into prescribed positions of the respective slots 10. These samples are prepared from four types of DNA fragments which are labelled by FITC, being a fluorescent material, by a well known method and so treated that respective bases A, G, T and C come to ends by the Sanger's method. The FITC is excited with an argon laser beam of 488 nm in wavelength, and generates fluorescence of 520 nm in wavelength.

When the power source 8 applies the electrophoresis voltage, the samples are electrophoresed in the electrophoresis gel 2 with time in an electrophoresis direction 14 as electrophoresis bands 16 and separated, to reach a measuring portion.

The measuring portion is provided with an excitation system for applying excitation light from an argon laser 18, which emits a laser beam of 488 nm in wavelength, by a condenser lens 20 and a mirror 21, and a detection system for collecting fluorescent light generated from fluorescent materials forming the electrophoresis bands 16 which are present in positions irradiated with the exciting laser beam by an objective lens 22 and detecting the fluorescent light by a photomultiplier 28 through an interference filter 24 of 520 nm, a condenser lens 26 and an optical fiber tube 27. The excitation and detection optical systems including the condenser lens 20, the mirror 21, the objective lens 22, the interference filter 24, the condenser lens 26 and the optical fiber tube 27 are provided on a scanning stage 30, which mechanically moves to scan on a measuring line in a direction (scanning direction 29) where the position irradiated with the excitation light beam intersects with the electrophoresis direction 14 every constant period.

Detection signals (fluorescent signals) from the photomultiplier 28 are incorporated in a signal processing microcomputer 31, which is a data processing unit, through an amplifier and an A-D converter 32. The microcomputer 31 also incorporates signals corresponding to positions irradiated with the excitation beam on the measuring position of the electrophoresis gel 2 as scan data. Thus, the overall fluorescent signals obtained by scanning of the excitation and detection optical systems in the scanning direction are incorporated in the microcomputer 31 with position information.

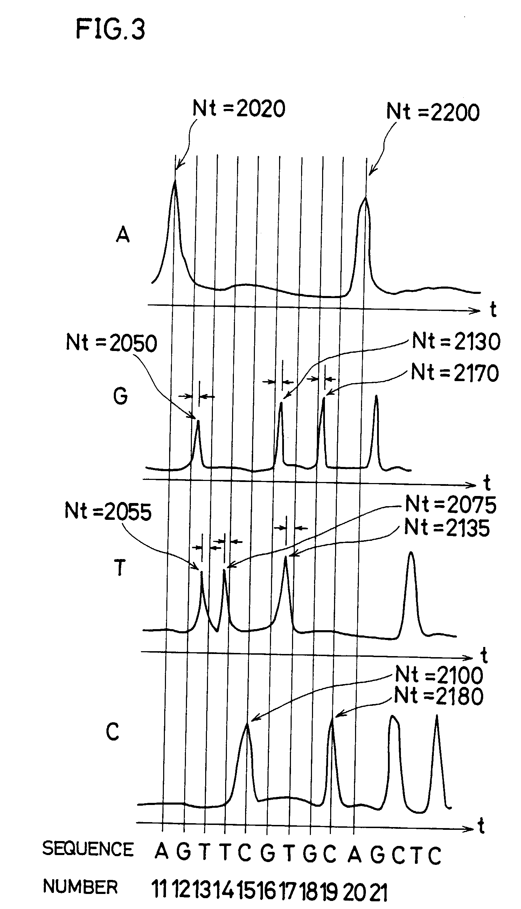

The operation of this embodiment is now described with reference to Figs. 3, 4 and 5.

Fig. 3 shows exemplary signals obtained in the base sequencing apparatus shown in Fig. 2. Symbols A, G, T and C correspond to the respective electrophoresis lanes, while symbol Nt represents numbers of scanning made by the optical systems in the scanning direction.

Fig. 3 shows portions having relatively short base lengths, and no inversion of signal appearance order, i.e., sequence misreading is caused even if smiling takes place, since difference between electrophoresis speeds per base length is relatively large. Referring to Fig. 3 in more detail, however, eight peaks of G, T and C are present between 11-th and 20-th peaks of A. When lines are drawn on the assumption that the eight peaks appear between the two peaks of A at regular intervals, it is understood that the peaks of G are delayed from the lines and the peaks of T appear slightly ahead of the lines although the peaks of C are present substantially on the lines.

When samples are electrophoresed under a constant voltage, the peaks will not appear strictly at regular intervals in the structure shown in Fig. 2. However, when time bases are calibrated between two peaks of a certain reference electrophoresis lane, i.e., the lane of A in this case as shown in Fig. 3, approximation of such regular intervals is sufficient since the interval between the two peaks of the reference lane is about 20 to 30 bases at the most.

As to the signals shown in Fig. 3, it is obvious that the appearance order is inversed in due course of time to cause errors in base sequencing since the peaks of G are delayed and those of T are ahead as compared with those of A and C.

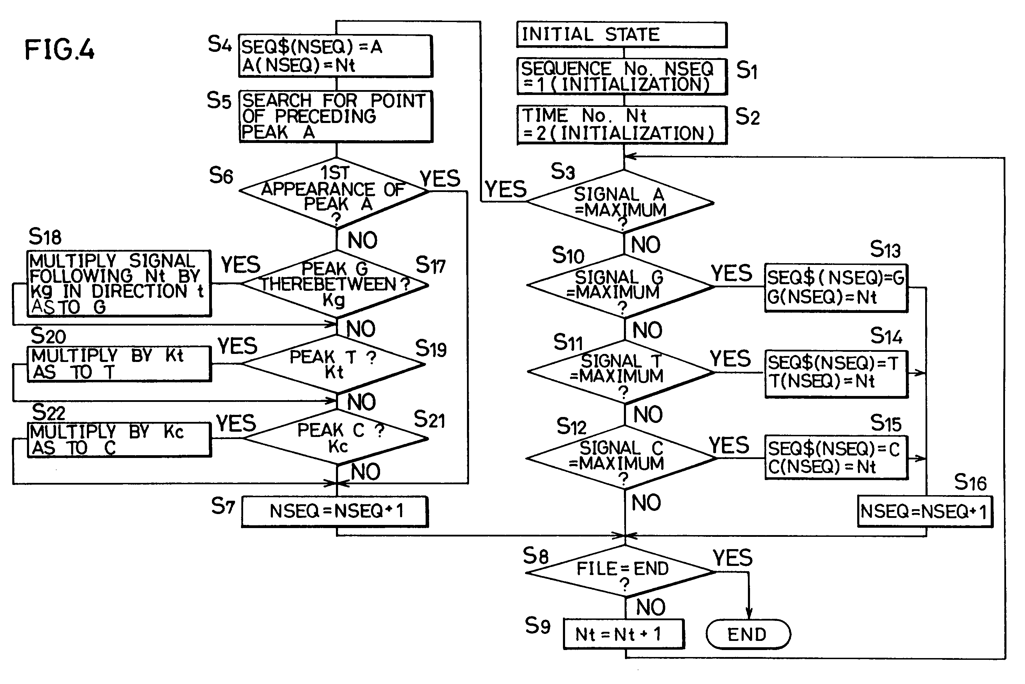

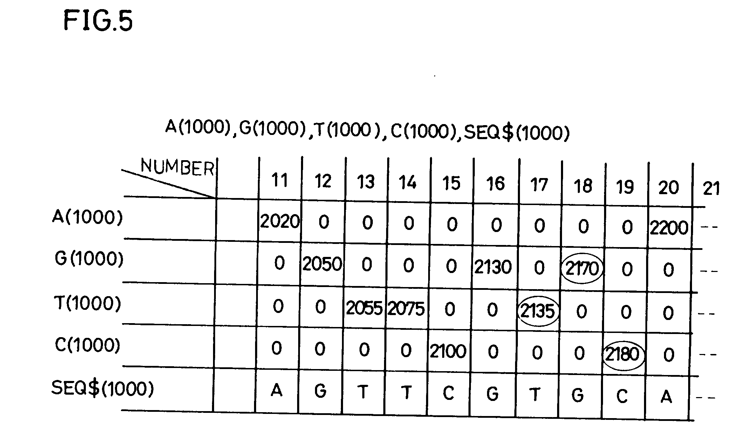

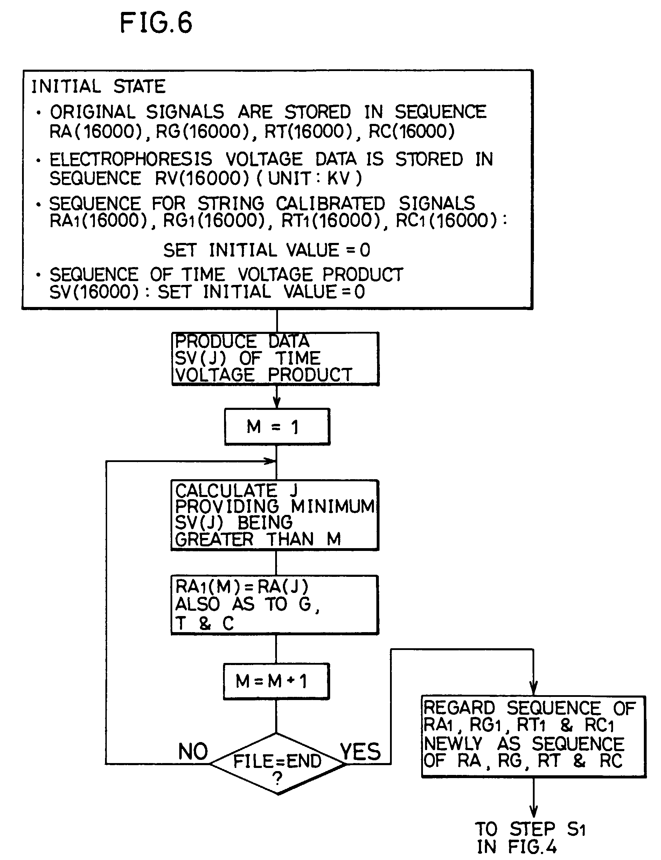

Procedure for calibrating the time bases is now described with reference to a flow chart shown in Fig. 4.

In an initial state, the detected signals of A, G, T and C shown in Fig. 3 are in sequence RA(16000), RG(16000), RT(16000) and RC(16000). The sequence RA(16000) starts from RA(0). This also applies to other sequence RG, RT and RG. However, the sequence RG, RT and RG are rewritten in accordance with progress of the program.

Initial values of sequence A(1000), G(1000), T(1000) and C(1000) for storing maximum value data are zero, and peaks are so numbered that an M-th peak appearing on G is G(M). Initial values of calibration coefficients Kg, Kt and Kc are set at 1. Signals for which time bases are calibrated as to the electrophoresis lanes of G, T and C are temporarily stored in sequence RG1(16000), RT1(16000) and RC1(16000), whose initial values are matched with measured values. Sequence SEQ$(1000) is adapted to store definitive base sequence, whose initial values are zero.

A sequence number NSEQ is initially set at 1, and a time number Nt is set at 2 (steps S1 and S2). Symbol Nt represent scan numbers in this embodiment.

The electrophoresis lane of A is assumed to be the reference lane, and a determination is made as to whether or not a signal A is a maximum signal (step S3). If the signal A is a maximum signal, it is assumed that SEQ$(NSEQ) = A and A(NSEQ) = Nt as base sequence (step S4). A determination is made as to whether or not there is a maximum signal of A ahead of this maximum, and if this maximum is the first one, 1 is added to the sequence number NSEQ as well as to the time number Nt (steps S5, S6, S7, S8 and S9), and the process returns to the step S3 to repeat the processing.

If the signal A is not a maximum signal, a determination is made as to whether or not there is a maximum signal in G, T or C in steps S10 to S12, and if there is no maximum signal, 1 is added to the time number Nt (steps S8 and S9), and the same operation is repeated again. If a maximum signal is found in G, T or C, the bases are sequenced (steps S13, S14 and S15) and 1 is added to the sequence number NSEQ as well as to the time number Nt (steps S16, S8 and S9), and the process returns to the step S3 to repeat the processing.

Referring again to Fig. 3, the 11-th peak A appears at Nt = 2020-th scanning and the 20-th peak A appears at Nt = 2200-th scanning, and peaks of other electrophoresis lanes are also detected to evaluate maximum value data as shown in Fig. 5. The base sequence SEQ$(1000) is defined as AGTTC ... ... as shown in Fig. 5.

Steps S17 to S22 shown in Fig. 4 are adapted to evalute calibration coefficients. In the example shown in Fig. 3, the process advances to the step S17 upon appearance of the 20-th peak A to calculate scan numbers of enclosed peaks in Fig. 5, i.e., scan numbers of the 19-th peak C, the 18-th peak G and the 17-th peak T in proportional distribution as values attained on the assumption that the peaks appear at regular intervals (this corresponds to vertical lines in Fig. 3) and to take ratios thereof to measured scan numbers, thereby calculating calibration coefficients of the respective electrophoresis lanes of G, T and C.

In relation to the signals shown in Fig. 3, the peak time (scan number) of the actual signal is 2170 as to the electrophoresis lane G, and the peak time calculated in proportional distribution on the assumption that the peaks appear at regular intervals is 2160, whereby the calibration coefficient Kg for G is as follows:

$$Kg = 2160/2170 = 0.99539$$

Also as to the electrophoresis lane T, the calibration coefficient Kt is similarly calculated as follows:

$$Kt = 2140/2135 = 1.0023419$$

As to the lane C, the calibration coefficient Kc is equal to 1.

The respective calibration coefficients evaluated in the aforementioned manner are multiplied by the times of the respective sequence of RG, RT and RC following 2200, to rewrite data of RG, RT and RC and introduce the same to RG1, RT1 and RC1.

This procedure is repeated every appearance of the peak A.

The flow chart shown in Fig. 4 is on the premise that the electrophoresis conditions are constant with constant voltage, constant current and constant power, for example, upon starting of electrophoresis at least from appearance of signals, while correction is required when the electrophoresis conditions are changed during electrophoresis, for example. Fig. 6 shows an exemplary data pretreatment method in relation to discontinuous change of electrophoresis conditions. In the example shown in Fig. 6, a data train is finally converted to electrophoresis data under a constant voltage of 1 Kv.

First, data of time voltage products are produced as to the respective times from measured electrophoresis voltage data RV(J) (unit: KV) as follows:

$$SV(J) = \sum_{K=0}^{J} RV(K) \quad (unit: [Scan \cdot KV])$$

where symbol SV(J) represents a monotone increasing function of J.

In order to evaluate respective data RA1(M), RG1(M), RT1(M) and RC1(M) (M = 1 ... ... 16000) of 1 KV constant voltage convesion values, the value of J providing the first SV(J) which is greater than M, for example, may be evaluated to apply values of original signals with respect to J. For example, RA1(M) = RA(J), RG1(M) = RG(J), ... ... .

After the pretreatment is performed according to the flow chart shown in Fig. 6, the process advances to the step S1 shown in Fig. 4.

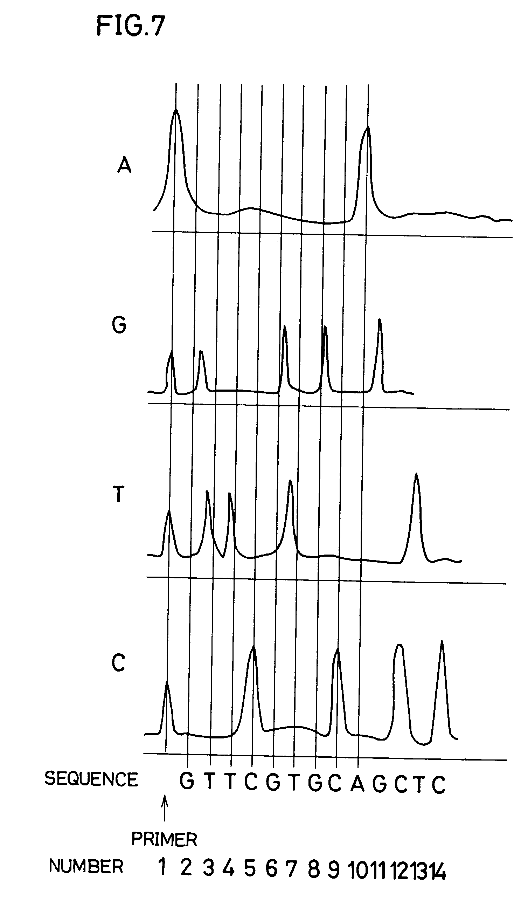

The first peak of the reference lane may be a fluorescent primer. In this case, peaks simultaneously appear at A, G, T and C of the first sequence numbers as shown in Fig. 7, for example. Also in this case, the flow chart shown in Fig. 4 requires no change but effectuates the same function.

In the flow chart shown in Fig. 4, the calibration coefficients are calculated every time a peak appears in the electrophoresis lane A, which is the reference lane, to repeat calibration of the time bases of the remaining three lanes. Alternatively, calibration coefficients once calculated in portions having relatively short base lengths, for example, may also be employed for portions having long base lengths.

Although the present invention has been described and illustrated in detail, it is clearly understood that the same is by way of illustration and example only and is not to be taken by way of limitation, the scope of the present invention being limited only by the terms of the appended claims.

The features disclosed in the foregoing description, in the claims and/or in the accompanying drawings may, both, separately and in any combination thereof, be material for realising the invention in diverse forms thereof.

## Claims

1. A base sequencing apparatus for dividing labelled nucleic acid fragment samples into four electrophoresis lanes in response to types of end bases and simultaneously gel-electrophoresing said samples while scanning signals outputted from said nucleic acid fragment samples in a direction perpendicular to the electrophoresis direction (14) for acquiring said signals in on-line real time, thereby sequencing bases in a data processing unit (31), wherein

   said data processing unit (31), comprises:

   signal storage means (40) for storing signals from respective said electrophoresis lanes with respect to times;

   maximum signal detection means (42) for detecting times providing maximum values of said signals as to respective said electrophoresis lanes;

   maximum signal time storage means (44) for storing said maximum signal times;

   appearance time estimation means (46) selecting one of said four electrophoresis lanes as a reference lane and assuming that there is no difference of mobility between said electrophoresis lanes for calculating appearance times of maximum signals of the remaining three electrophoresis lanes appearing between two maximum signals of said reference lane on the time base of the reference lane;

   calibration coefficient calculation means (48) for calculating calibration coefficients from ratios of said maximum signal times of said three electrophoresis lanes calculated in said appearance time estimation means (46) to actual maximum signal times;

   time base calibration means (50) for calibrating said time bases of said three electrophoresis lanes with said calibration coefficients; and

   base sequencing means (52) for sequencing bases from said maximum signal times of said reference lane and said three electrophoresis lanes based on calibrated said time bases.

2. A base sequencing apparatus in accordance with claim 1, wherein said appearance time estimation means (46) performs calculation on the assumption that said maximum signals of said three electrophoresis lanes appear between two maximum signals of said reference lane at regular time intervals.

3. A base sequencing apparatus in accordance with claim 1, wherein said calibration coefficient calculation means (48) calculates said calibration coefficients every time a maximum signal appears on said reference lane between said signal and a preceding maximum signal of said reference lane, and said time base calibration means (50) calibrates said times bases of said three electropholesis lanes being effective until a next maximum signal appears on said reference lane.

4. A base sequencing apparatus in accordance with claim 1, wherein said calibration coefficient calculation means (48) once calculates calibration coefficients in portions having short base lengths, and said time base calibration means (50) calibrates said times bases with said calibration coefficients with respect to portions having long base lengths.

5. A base sequencing apparatus in accordance with claim 1, further comprising means for converting time bases in such a case that electrophoresis conditions are changed to time bases in such a case that electrophoresis conditions are constant.

## Patentansprüche

1. Eine Vorrichtung zur Bestimmung der Basensequenz zum Auftrennen von markierten Nucleinsäurefragmentproben in vier Elektrophoresespuren als Antwort auf Arten von Endbasen und gleichzeitigem Gel-Elektrophoresieren der Proben, während von den Nucleinsäurefragmentproben abgegebene Signale in einer zu der Elektrophoreserichtung (14) senkrechten Richtung zum Erlangen der Signale in Online-Echtzeit abgetastet werden, und auf diese Weise die Basensequenzen in einer Datenverarbeitungseinheit (31) bestimmt werden, dadurch gekennzeichnet,

EP 0 483 460 B1

daß

die Datenverarbeitungseinheit (31) umfaßt:

eine Signalspeichereinrichtung (40) zum Speichern von Signalen der jeweiligen Elektrophoresespur bezüglich Zeiten;

eine Maximalsignalnachweiseinrichtung (42) zum Nachweisen von Zeiten, die Maximalwerte der Signale hinsichtlich der jeweiligen Elektrophoresespuren liefern;

eine Maximalsignalzeitspeichereinrichtung (44) zum Speichern der Maximalsignalzeiten;

eine Auftrittszeitauswerteeinrichtung (46), die eine der vier Elektrophoresespuren als eine Referenzspur auswählt und annimmt, daß es keine Mobilitätsdifferenz zwischen den Elektrophoresespuren gibt, zum Berechnen von Auftrittszeiten von Maximalsignalen der restlichen drei Elektrophoresespuren, die zwischen zwei Maximalsignalen der Referenzspur auf der Zeitbasis der Referenspur auftreten;

eine Kalibrierkoeffizientenberechnungseinrichtung (48) zum Berechnen von Kalibrierkoeffizienten anhand der Verhältnisse der Maximalsignalzeiten der drei Elektrophoresebahnen , die in der Auftrittszeitauswerteeinrichtung (46) berechnet worden sind, zu den tatsächlichen Maximalsignalzeiten;

eine Zeitbasenkalibriereinrichtung (50) zum Kalibrieren der Zeitbasen der drei Elektrophoresespuren mit den Kalibrierkoeffizienten; und

eine Einrichtung zur Bestimmung der Basensequenz (52) zum Bestimmen der Basensequenzen anhand der Maximalsignalzeiten der Referenzspuren und der drei Elektrophoresespuren auf der Grundlage der kalibrierten Zeitbasen.

2. Eine Vorrichtung zur Bestimmung der Basensequenz gemäß Anspruch 1, dadurch gekennzeichnet, daß die Auftrittszeitauswerteeinrichtung (46) eine Berechnung unter der Annahme durchführt, daß die Maximalsignale der drei Elektrophoresespuren zwischen zwei Maximalsignalen der Referenzspur in regelmäßigen Zeitintervallen auftreten.

3. Eine Vorrichtung zur Bestimmung der Basensequenzen gemäß Anspruch 1, dadurch gekennzeichnet, daß die Kalibrierkoeffizientenberechnungseinrichtung (48) die Kalibrierkoeffizienten immer dann berechnet, wenn ein Maximalsignal in der Referenzspur zwischen dem Signal und einem vorangehenden Maximalsignal der Referenzbahn auftritt, und die Zeitbasenkalibriereinrichtung (50) die Zeitbasen der drei Elektrophoresespuren kalibriert, die gelten, bis ein nächstes Maximalsignal in der Referenzspur auftritt.

4. Eine Vorrichtung zur Bestimmung der Basensequenz gemäß Anspruch 1, dadurch gekennzeichnet, daß die Kalibrierkoeffizientenberechnungseinrichtung (48) die Kalibrierkoeffizienten einmal in Abschnitten mit kurzen Basenlängen berechnet und die Zeitbasenkalibriereinrichtung (50) die Zeitbasen mit den Kalibrierkoeffizienten bezüglich Abschnitte mit langen Basenlängen kalibriert.

5. Eine Vorrichtung zur Bestimmung der Basensequenz gemäß Anspruch 1, dadurch gekennzeichnet, daß sie außerdem für den Fall, daß die Elektrophoresebedingungen geändert werden, eine Einrichtung zum Umwandeln der Zeitbasen in derartige Zeitbasen umfaßt, daß die Elektrophoresebedingungen konstant sind.

**Revendications**

1. Appareil de séquencement de bases pour la division d'échantillons de fragments d'acides nucléiques marqués en quatre voies d'électrophorèse en réponse à des types de bases terminales et simultanément l'électrophorèse sur gel de ces échantillons avec balayage de signaux émis par les échantillons de fragments d'acides nucléiques dans une direction perpendiculaire à la direction d'électrophorèse (14) pour l'acquisition de ces signaux en temps réel en direct, en vue du séquencement de bases dans une unité de traitement de l'information (31), dans lequel

l'unité de traitement de l'information (31) comprend :

7

un moyen de mémorisation de signaux (40) pour la mémorisation de signaux provenant des voies respectives d'électrophorèse, par rapport au temps,

un moyen de détection de signaux maximaux (42) pour la détection de temps fournissant des valeurs maximales des signaux relativement aux voies respectives d'électrophorèse,

un moyen de mémorisation de temps de signaux maximaux (44) pour la mémorisation des temps de signaux maximaux,

un moyen d'estimation de temps d'apparition (46), choisissant une des quatre voies d'électrophorèse comme voie de référence et supposant qu'il n'y a pas de différence de mobilité entre les voies d'électrophorèse pour calculer des temps d'apparition de signaux maximaux des trois voies d'électrophorèse restantes apparaissant entre deux signaux maximaux de la voie de référence sur la base de temps de la voie de référence,

un moyen de calcul de coefficients de calibrage (48) pour le calcul de coefficients de calibrage à partir de rapports des temps de signaux maximaux des trois voies d'électrophorèse calculés dans le moyen d'estimation de temps d'apparition (46) à des temps réels de signaux maximaux,

un moyen de calibrage de bases de temps (50) pour le calibrage des bases de temps des trois voies d'électrophorèse avec les coefficients de calibrage, et

un moyen de séquencement de bases (52) pour le séquencement de bases à partir des temps de signaux maximaux de la voie de référence et des trois voies d'électrophorèse basés sur les bases de temps calibrées.

2. Appareil de séquencement de bases selon la revendication 1, dans lequel le moyen d'estimation de temps d'apparition (46) opère le calcul sur l'hypothèse que les signaux maximaux des trois voies d'électrophorèse apparaissent entre deux signaux maximaux de la voie de référence à des intervalles de temps réguliers.

3. Appareil de séquencement de bases selon la revendication 1, dans lequel le moyen de calcul de coefficients de calibrage (48) calcule les coefficients de calibrage chaque fois qu'un signal maximal apparaît sur la voie de référence entre ledit signal et un signal maximal précédent de la voie de référence, et le moyen de calibrage de bases de temps (50) calibre les bases de temps des trois voies d'électrophorèse effectives jusqu'à ce qu'un prochain signal maximal apparaisse sur la voie de référence.

4. Appareil de séquencement de bases selon la revendication 1, dans lequel le moyen de calcul de coefficients de calibrage (48) calcule une fois des coefficients de calibrage dans des parties ayant de courtes longueurs de base, et le moyen de calibrage de bases de temps (50) calibre les bases de temps avec les coefficients de calibrage relativement à des parties ayant de grandes longueurs de base.

5. Appareil de séquencement de bases selon la revendication 1, comprenant en outre un moyen de conversion des bases de temps dans le cas où les conditions d'électrophorèse sont modifiées en bases de temps dans le cas où les conditions d'électrophorèse sont constantes.

EP 0 483 460 B1

## FIG.1

SCAN DATA    FLUORESCENT SIGNAL

SIGNAL STORAGE MEANS (FOR EACH ELECTROPHORESIS LANE) ～40

MAXIMUM SIGNAL TIME DETECTION MEANS ～42

MAXIMUM SIGNAL TIME STORAGE MEANS ～44

APPEARANCE TIME ESTIMATION MEANS ～46

CALIBRATION COEFFICIENT CALCULATION MEANS (FOR OTHER 3 ELECTROPHORESIS LANES) ～48

TIME BASE CALIBRATION MEANS ～50

BASE SEQUENCING MEANS ～52

9

## FIG.2

# FIG.3

FIG.4

# FIG.5

A(1000),G(1000),T(1000),C(1000),SEQ$(1000)

| NUMBER | | 11 | 12 | 13 | 14 | 15 | 16 | 17 | 18 | 19 | 20 | 21 |
|---|---|---|---|---|---|---|---|---|---|---|---|---|
| A(1000) | | 2020 | 0 | 0 | 0 | 0 | 0 | 0 | 0 | 0 | 2200 | -- |
| G(1000) | | 0 | 2050 | 0 | 0 | 0 | 2130 | 0 | 2170 | 0 | 0 | -- |
| T(1000) | | 0 | 0 | 2055 | 2075 | 0 | 0 | 2135 | 0 | 0 | 0 | -- |
| C(1000) | | 0 | 0 | 0 | 0 | 2100 | 0 | 0 | 0 | 2180 | 0 | -- |
| SEQ$(1000) | | A | G | T | T | C | G | T | G | C | A | -- |

EP 0 483 460 B1

# FIG.6

INITIAL STATE

· ORIGINAL SIGNALS ARE STORED IN SEQUENCE
  RA(16000), RG(16000), RT(16000), RC(16000)

· ELECTROPHORESIS VOLTAGE DATA IS STORED IN
  SEQUENCE RV(16000) ( UNIT : KV )

· SEQUENCE FOR STRING CALIBRATED SIGNALS
  $RA_1$(16000), $RG_1$(16000), $RT_1$(16000), $RC_1$(16000) :

  SET INITIAL VALUE = 0

· SEQUENCE OF TIME VOLTAGE PRODUCT
  SV(16000) : SET INITIAL VALUE = 0

---

PRODUCE DATA
SV(J) OF TIME
VOLTAGE PRODUCT

M = 1

CALCULATE J
PROVIDING MINIMUM
SV(J) BEING
GREATER THAN M

$RA_1$(M) = RA(J)
ALSO AS TO G,
T & C

M = M + 1

FILE = END ?

NO

YES → REGARD SEQUENCE OF
$RA_1$, $RG_1$, $RT_1$ & $RC_1$
NEWLY AS SEQUENCE
OF RA, RG, RT & RC

TO STEP $S_1$
IN FIG.4

14

## FIG.7